# EUROPEAN PATENT SPECIFICATION

(11) **EP 3 962 049 B1**
(45) Date of publication and mention of the grant of the patent: **09.10.2024**
(21) Application number: 20796122.8
(22) Date of filing: 25.03.2020
(51) Int. Cl.: H04M 1/725, G06F 9/54, H04M 1/27457, H04M 1/72436, G06F 3/0482, G06F 3/0488, G06F 3/04842

(54) **CONTENT INPUT METHOD AND TERMINAL DEVICE**
INHALTSEINGABEVERFAHREN UND ENDGERÄT
PROCÉDÉ DE SAISIE DE CONTENU ET ÉQUIPEMENT TERMINAL

(30) Priority: 23.04.2019 CN 201910330449
(43) Date of publication of application: 02.03.2022
(73) Proprietor: VIVO MOBILE COMMUNICATION CO., LTD., Dongguan, Guangdong 523860 (CN)
(72) Inventor: HONG, Yue, Dongguan, Guangdong 523860 (CN)
(74) Representative: Petraz, Gilberto Luigi
(86) International application number: PCT/CN2020/081233
(87) International publication number: WO 2020/215969

(56) References cited:
- EP-A1- 3 131 273
- EP-A2- 2 838 005
- WO-A2-2016/191737
- CN-A- 1 996 959
- CN-A- 103 246 638
- CN-A- 106 095 243
- CN-A- 106 951 220
- CN-A- 108 093 137
- CN-A- 110 225 180
- US-A1- 2016 048 284

## Description

### TECHNICAL FIELD

Embodiments of the present disclosure relate to the field of communications technologies, and in particular, to a content inputting method and a terminal device.

### BACKGROUND

At present, a user may use a terminal device, copy content from an interface, and paste the content into another interface.

For example, the user copies a mobile phone number from a text message into a contacts interface. First the user triggers the terminal device to select and copy the mobile phone number in the text message interface, and then the user triggers the terminal device to exit the text message interface, and triggers the terminal device to display the contacts interface. Then, the user taps and holds at an input position corresponding to the mobile phone number in the contacts interface, to trigger the terminal device to display the copied mobile phone number in a clipboard, and at last the user taps the mobile phone number, to trigger the terminal device to paste the mobile phone number at the input position corresponding to the mobile phone number in the contacts interface.

However, in the foregoing method of copy and paste, there are relatively too many operation steps for copying a mobile phone number. If the user needs to copy and paste a plurality of pieces of information such as email accounts and company addresses, the user needs to trigger a terminal device for many times to perform the foregoing operation steps for many times. This causes more cumbersome operation steps in the terminal device.

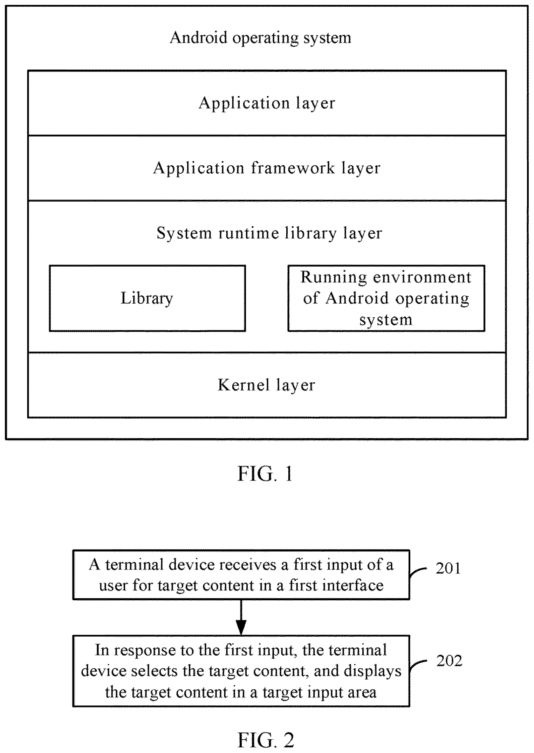

WO 2016/191737 discloses that in accordance with some embodiments, a method is performed at an electronic device (e.g., portable multifunction device 100, FIG. IA, configured in accordance with any one of Computing Device A-D, Figure 1E) with a touch-sensitive surface and display (in some embodiments, the touch-sensitive surface and the display are integrated, as is shown for touch screen 112, FIG. 1C). The method includes: presenting content in a first application. The method also includes: receiving a request from the user to open a second application that is distinct from the first application, the second application including an input-receiving field. In response to receiving the request, the method includes: presenting the second application with the input-receiving field. Before receiving any user input at the input-receiving field, the method includes: providing a selectable user interface object to allow the user to paste at least a portion of the content into the input-receiving field. In response to detecting a selection of the selectable user interface object, the method includes: pasting the portion of the content into the input-receiving field. In this way, users are provided with proactive paste actions in a second application based content previously viewed in a first action.

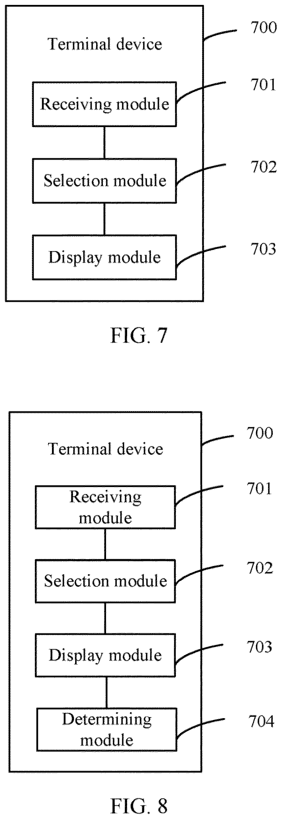

EP 2838005 A2 discloses that in the clipboard 602 shown in FIG. 8 (b), first to fifth contents 701 to 705 are included. If the clipboard 602 occupies one prescribed region of the screen only, as shown in FIG. 8 (b), the controller180 can receives a selection of a prescribed location 710, on which a paste operation will be performed, from a user. As one example of the location selection, an input 1000f of a touch to a target content of a paste operation is received and the touch input is then shifted to a prescribed location by maintaining the corresponding touch. If the corresponding touch is removed from the prescribed location 710, the controller 180 can input the corresponding content to the prescribed location by a paste operation.

EP 3131273 A1 discloses that the mobile terminal receives a message 1220 including contact information from a transmission device and can output the message in a message interface 1210. In the embodiment of FIG. 12 (a), a counterpart receives a request for contact information of 'Tim' from a user and can provide the contact information of 'Tim' to the user. In this instance, the message 1220 including the contact information can include a contact name and number. Further, as shown in FIG. 12 (a), the mobile terminal can sense a first input signal 1230 input on the message 1220 including the contact information. The first input signal 1230 can include a touch input, a gesture input and the like input on a region corresponding to the message 1220 in the display unit. As shown in FIG. 12 (b), the mobile terminal can execute a contact add interface 1240. In particular, the mobile terminal can be connected to the contact add interface 1240, whereas there is no separately connected interface when a first input signal 1230 input on a text message is sensed. The mobile terminal then executes a contact interface and a message interface by multitasking and can display the contact add interface on the display unit. Further, a user can store contact information included in a message, which is received from a counterpart, in the mobile terminal.

CN108093137A discloses that As shown in Fig. 1-1, the user may perform the dragging input on a phone number of a display interface, and the mobile terminal receives the dragging input and then automatically discern the character string of the phone number and pitches on characters of the phone number. With the progress of the dragging input, the mobile terminal switches the current display interface to a dialing interface, and the dialing interface includes a dialing control area, as shown in Fig. 1-2. The dialing control area may include a phone number entry area and dialing keys. When the phone number is on the interface of the dialing control area, and if the user's finger is released, the mobile terminal automatically pastes the phone number to the phone number input area of the dialing control area and displays the phone number.

### SUMMARY

Embodiments of the present disclosure provide a content inputting method and a terminal device, to resolve a problem that in a conventional method of copy and paste, operation steps in the terminal device are cumbersome as a user needs to trigger a terminal device for many times to perform operation steps for many times.

To solve the foregoing technical problem, the embodiments of this disclosure are implemented as follows:

According to a first aspect, an embodiment of the present disclosure provides a content inputting method, which is defined in claim 1.

According to a second aspect, an embodiment of the present disclosure further provides a terminal device, which is defined in claim 10.

According to a third aspect, an embodiment of the present disclosure provides a computer-readable storage medium, which is defined in claim 12.

Further advantageous embodiments of the present disclosure are indicated in the dependent claims. It is to be understood that both the forgoing general description and the following detailed description are exemplary only, and are not restrictive of the present disclosure.

### BRIEF DESCRIPTION OF THE DRAWING

FIG. 1 is a schematic diagram of a possible architecture of an Android operating system according to an embodiment of the present disclosure;
FIG. 2 is a schematic flowchart of a content inputting method according to an embodiment of the present disclosure;
FIG. 3 is a first schematic diagram of a display interface according to an embodiment of the present disclosure;
FIG. 4 is a second schematic diagram of a display interface according to an embodiment of the present disclosure;
FIG. 5 is a third schematic diagram of a display interface according to an embodiment of the present disclosure;
FIG. 6 is a fourth schematic diagram of a display interface according to an embodiment of the present disclosure;
FIG. 7 is a first schematic diagram of a possible structure of a terminal device according to an embodiment of the present disclosure;
FIG. 8 is a second schematic diagram of a possible structure of a terminal device according to an embodiment of the present disclosure; and
FIG. 9 is a schematic diagram of a hardware structure of a terminal device according to an embodiment of the present disclosure.

### DESCRIPTION OF EMBODIMENTS

The technical solutions in the embodiments of the present disclosure are described below clearly and completely with reference to the accompanying drawings in the embodiments of the present disclosure. Clearly, the described embodiments are some rather than all of the embodiments of the present disclosure. All other embodiments obtained by a person of ordinary skill in the art based on the embodiments of the present disclosure without creative efforts shall fall within the protection scope of the present disclosure.

It should be noted that "/" in this specification represents or. For example, A/B may represent A or B. "and/or" in this specification merely describes an association relationship between associated objects, and indicates that there may be three relationships. For example, A and/or B may represent that there are three cases: There is only A, there are both A and B, and there is only B. The term "a plurality of" refers to two or more.

In the specification and claims of the present disclosure, terms such as "first" and "second" are used for distinguishing different objects, but are not used for describing a particular sequence of the objects. For example, a first input and a second input are used for distinguishing different inputs, but are not used for describing a particular sequence of the inputs.

It should be noted that in the embodiments of the present disclosure, words such as "example" or "for example" is used to indicate an example, an instance, or a description. Any embodiment or design solution described as "an example" or with "for example" in the embodiments of the present disclosure should not be explained as being more preferred or having more advantages than another embodiment or design solution. Exactly, use of the words such as "example" or "for example" is intended to present a related concept in a specific manner.

The terminal device in the embodiments of the present disclosure may be a terminal device with an operating system. The operating system may be an Android (Android) operating system, or may be an iOS operating system or another possible operating system, which is not specifically limited in the embodiments of the present disclosure.

In a content inputting method in the embodiments of the present disclosure, a terminal device first receives a first input of a user for target content in a first interface; and then in response to the first input, the terminal device selects the target content, and displays the target content in a target input area. The target input area is an input area in the first interface, or the target input area is an input area in a second interface, and the first interface and the second interface are different. In one case, the target input area is an input area in the first interface, that is, in a case in which content is input in a same interface, the user does not need to tap the input area again and select paste to trigger the terminal device to display the target content in the input area. In the other case, the target input area is an input area in the second interface, and the first interface and the second interface are different. That is, in a case in which content is input in different interfaces, the target content is displayed in the target input area in the second interface by using the first input, and the target content is content in the first interface. That is, the terminal device directly inputs, after the first input, the target content selected in the first interface in an input area in another interface. Compared with the conventional method of copy and paste, the user does not need to trigger the terminal device to exit the first interface first, manually trigger the terminal device to bring up the second interface, to receive an input of the user and select an input area, and then trigger the terminal device to paste copied content in the input area, thereby avoiding frequent switching between different applications. Therefore, operation steps are simpler in the content inputting method provided in the embodiments of the present disclosure, and a time for operating content inputting is shortened. When content needs to be input in an input area for a plurality of times, more time for operating is saved.

The following uses the Android operating system as an example to describe a software environment to which the content inputting method provided in the embodiments of the present disclosure is applied.

FIG. 1 is a schematic diagram of a possible architecture of an Android operating system according to an embodiment of the present disclosure. In FIG. 1, the architecture of the Android operating system includes 4 layers, which are an application layer, an application framework layer, a system runtime library layer, and a kernel layer (which may specifically be a Linux kernel layer).

The application layer includes various applications in the Android operating system (that include system applications and third-party applications).

The application framework layer is an application framework, and a developer may develop some applications based on the application framework layer following a rule of developing the application framework.

The system runtime library layer includes a library (also referred to as a system library) and a running environment of the Android operating system. The library mainly provides various resources required in the Android operating system. The running environment of the Android operating system is used for providing a software environment for the Android operating system.

The kernel layer is an operating system layer of the Android operating system, and is the lowest layer in software layers of the Android operating system. The kernel layer provides core system services and hardware-related drivers for the Android operating system based on the Linux kernel.

The Android operating system is used as an example. In the embodiments of the present disclosure, a developer may develop, based on the system architecture of the Android operating system shown in FIG. 1, a software program to implement the content inputting method provided in the embodiments of the present disclosure, so that the content inputting method can be performed based on the Android operating system shown in FIG. 1. That is, a processor or the terminal device may run the software program in the Android operating system to implement the content inputting method provided in the embodiments of the present disclosure.

The content inputting method according to claim 1 is described below with reference to FIG. 2. FIG. 2 is a schematic flowchart of a content inputting method according to claim 1 of the present invention. As shown in FIG. 2, the content inputting method includes step 201 and step 202.

Step 201: A terminal device receives a first input of a user for target content in a first interface.

For example, the target content may be a text, an image, a video, audio, a link, a file, and the like.

It should to be noted that, a manner of inputting of a user related to this embodiment of the present disclosure may be a touch screen input, a fingerprint input, a gravity input, a key input, or the like. The touch screen input is a pressing input, a long pressing input, a swipe input, a tap input, a floating input (the user's input near a touch screen), or the like of the user on a touch screen of the terminal device. The fingerprint input is a swipe fingerprint input, a long pressing fingerprint input, a single tap fingerprint input, and a double tap fingerprint input of a user on a fingerprint reader of the terminal device. The gravity input is an input by shaking the terminal device in a specific direction by a user, shaking for a specific quantity of times, or the like. The key input corresponds to a user's single tap input, double tap input, long pressing input, combined key input, or the like on a power key, volume key, home key, or the like of the terminal device. An input of the user such as the first input is not specifically limited in this embodiment of the present disclosure.

Step 202: In response to the first input, the terminal device selects the target content, and displays the target content in a target input area.

The target input area is an input area in a second interface, and the first interface and the second interface are different; and the second interface is a last interface displayed before the first interface is displayed by the terminal device.

It can be understood that, in the case in which the target input area is an input area in the first interface, the user may select the target content in a current interface, and display the target content in an input area in the current interface. In the case in which the target input area is an input area in the second interface, the user may select the target content in a current interface, and display the target content in an input area in another interface other than the current interface.

Optionally, the first interface and the second interface may be different interfaces in a same application, or the first interface and the second interface may be interfaces in different applications.

It can be understood that, when the first interface and the second interface are interfaces in different applications, in the content inputting method provided in this embodiment of the present disclosure, copy and paste in different applications may be performed; and when the first interface and the second interface are different interfaces in a same application, in the content inputting method provided in this embodiment of the present disclosure, copy and paste in a same application may be performed.

Optionally, in the case in which the target input area is an input area in the second interface, the second interface is an interface displayed at a second time point that is before the first interface is displayed and that has a shortest time interval with a first time point for displaying the first interface.

That is, the terminal device displays the second interface at the second time point, and displays the first interface on a display screen at the first time point. Between the second time point and the first time point, the terminal device does not display another interface other than the second interface.

Optionally, the second interface may be a last interface displayed before the first interface is displayed by the terminal device. In this case, the second interface and the first interface may be different interfaces in a same application, or the second interface and the first interface may be different interfaces in different applications. Alternatively, the second interface may be a last interface switched to be run in the background when the first interface is displayed. The terminal device may first display the target content in the second interface running in the background, and then display the second interface.

Based on this solution, the terminal device may determine the interface displayed at the second time point that is before the first interface is displayed and that has the shortest time interval with the first time point for displaying the first interface as the second interface, and then determine the target input area in the second interface, so as to display the target content in the target input area in the second interface. Compared with the conventional method of copy and paste, the user does not need to trigger the terminal device to exit the first interface first, manually trigger the terminal device to bring up the second interface, to receive an input of the user and select an input area, and then trigger the terminal device to paste copied content in the input area, thereby avoiding frequent switching between different applications.

Optionally, in the case in which the target input area is an input area in the second interface, the second interface is an interface displayed separately on a display screen with the first interface.

It can be understood that, in this solution, the terminal device currently displays the first interface and the second interface separately. After receiving the first input of the user for the target content in the first interface, the terminal device may display the target content in an input area in another interface displayed separately on a display screen, to facilitate user operations in which the user does not need to perform too many operation steps.

In this embodiment of the present disclosure, the terminal device first receives the first input of the user for the target content in the first interface; and then in response to the first input, the terminal device selects the target content, and displays the target content in the target input area. The target input area is an input area in the first interface, or the target input area is an input area in the second interface, and the first interface and the second interface are different. In one case, the target input area is an input area in the first interface, that is, in a case in which content is input in a same interface, the user does not need to tap the input area again and select paste to trigger the terminal device to display the target content in the input area. In the other case, the target input area is an input area in the second interface, and the first interface and the second interface are different. That is, in a case in which content is input in different interfaces, the target content is displayed in the target input area in the second interface by using the first input, and the target content is content in the first interface. That is, the terminal device may directly input, after the first input, the target content selected in the first interface in an input area in another interface. Compared with the conventional method of copy and paste, the user does not need to trigger the terminal device to exit the first interface first, manually trigger the terminal device to bring up the second interface, to receive an input of the user and select an input area, and then trigger the terminal device to paste copied content in the input area, thereby avoiding frequent switching between different applications. Therefore, operation steps are simpler in the content inputting method provided in the embodiments of the present disclosure, and a time for operating content inputting is shortened. When content needs to be input in an input area for a plurality of times, more time for operating is saved.

In a possible implementation, the content inputting method provided in the embodiments of the present disclosure may further include step 203 after the target content is selected.

Step 203: The terminal device determines the target input area.

It should be noted that, both the first interface and the second interface may include one or more input areas. This is not limited in this embodiment of the present disclosure.

It can be understood that an area in which a cursor pointer is located may be an area in which the user needs to input content.

Generally, when the terminal device displays one interface, there may be no cursor pointer in any input area in at least one input areas in the interface, or a cursor pointer may be displayed in any input area by default, and when there is no cursor pointer in any input area in the interface, the user may manually input to trigger putting a cursor pointer in an input area selected by the user.

Example 1: In the case in which the second interface is an interface displayed at a second time point that is before the first interface is displayed and that has a shortest time interval with a first time point for displaying the first interface, the target input area is a first input area that is in the second interface and in which a cursor pointer at a third time point before the first interface is displayed that has a shortest time interval with a first time point is located.

In other words, the target input area is an input area that is in the second interface and in which the cursor pointer is located last time before the first interface is displayed.

In a case in which the second interface is displayed separately on a display screen, for example, the second interface includes two areas that are a first area and a second area, an interface of a first application is displayed in the first area, an interface of a second application is displayed in the second area, and the target input area may be an input area of an area that is in the first area and the second area and in which the cursor pointer is located last time. In a case in which the second interface is not displayed separately on a display screen, for example, the second interface is an interface of a third application, the target input area is an input area that is in the interface of the third application and in which the cursor pointer is located last time.

Based on this solution, the terminal device may determine the interface displayed at the second time point that is before the first interface is displayed and that has the shortest time interval with the first time point for displaying the first interface as the second interface, and then determine the first input area that is in the second interface and in which the cursor pointer at the third time point before the first interface is displayed that has the shortest time interval with the first time point is located as the target input area, so as to display the target content in the target input area. Compared with the conventional method of copy and paste, the target input area in which content is to be input is determined based on information about the cursor pointer, and the target content is displayed in the target input area, so that the user does not need to trigger the terminal device to exit the first interface first, manually trigger the terminal device to bring up the second interface, to receive an input of the user and select an input area, and then trigger the terminal device to paste copied content in the input area, thereby avoiding frequent switching between different applications.

Example 2: In the case in which the second interface is an interface displayed at a second time point that is before the first interface is displayed and that has a shortest time interval with a first time point for displaying the first interface, the target input area is at least two second input areas in the second interface before the first interface is displayed, the second interface includes at least two third interfaces displayed separately on a display screen, and each second input area corresponds to a different third interface.

In other words, in this solution, if the second interface are interfaces displayed separately on a display screen, and there is an input area included in the at least two third interfaces displayed separately on a display screen, the terminal device may paste the target content in the input area in the at least two third interfaces. For example, the second interface includes a chat interface of a communications application 1 and a chat interface of a communications application 2, and the terminal device paste the target content in an input area in the chat interface of the communications application 1 and an input area in the chat interface in the communications application 2.

Optionally, in this scenario, each third interface may include an input area, or may not include an input area. In a case in which an input area is included, one third interface includes one input area.

Based on this solution, in the case in which the second interface is displayed separately on a display screen, the at least two second input areas in the second interface before the first interface is displayed are determined as the target input area. Then, the target content is displayed in the target input area, that is, in a case in which content is input in a plurality of areas in a same interface, the user does not need to repeatedly tap an input area and select paste to trigger the terminal device to display the target content in the input area, and steps of inputting content are simplified.

Example 3: In a case in which the target input area is an input area in the first interface, the target input area is a first input area that is in the first interface and in which a cursor pointer at a fourth time point that has a shortest time interval with a time point for receiving the first input is located. In other words, the target input area may be the first input area that is in the first interface and in which the cursor pointer is located last time.

It can be understood that, in this scenario, the first interface may include one or more input areas.

Based on this solution, in a case in which the first interface includes a plurality of input areas, for example, the user needs to fill in a plurality of pieces of information in a form in the first interface, a cursor pointer may be triggered first and displayed in one input area in the plurality of input areas, and the target content is copied in the first interface and then displayed in the input area in which the cursor pointer is located.

In a possible implementation, in the case in which the second interface is the interface displayed at the second time point that is before the first interface is displayed and that has the shortest time interval with the first time point for displaying the first interface, step 202 in the content inputting method provided in this embodiment of the present disclosure may specifically be performed through step 202a.

Step 202a: In response to the first input, the terminal device selects the target content, updates the first interface to the second interface, and displays the target content in the target input area.

It can be understood that, the terminal device may display the second interface first, and after determining the target input area, the terminal device then displays the target content in the target input area, so that the user may see the process of copy and paste in the interface, thereby gaining a better visualization effect.

Based on this solution, the terminal device may first update the first interface to the second interface, and then determine the target input area in the second interface. At last, the terminal device displays the target content in the target input area. After selecting the target content, the user can input the target content in the target input area by inputting only once. In a case in which content needs to be input in a plurality of areas, the content inputting method provided in the embodiments of the present disclosure, compared with a manner of copy and paste in a related technology, does not require a user to manually switch between interfaces for a plurality of times, so that operating is convenient, and there is better user experience.

Optionally, the first input may include a first sub-input and a second sub-input.

Further, step 202 or step 202a can specifically be performed through step 202b and step 202c.

Step 202b: The terminal device selects the target content in response to the first sub-input.

For example, after the terminal device receives the first sub-input, the terminal device may first display a selection mark, for example, highlight the target content.

Step 202c: The terminal device displays the target content in the target input area in response to the second sub-input.

The second sub-input may be a second sub-input of the user for the target content, may be an input of the user for the target content, may be an input for a control displayed in an interface, may be an input for a physical key, or may be an input for a preset gesture. This is not specifically limited in this embodiment of the present disclosure.

Specifically, step 202c may be performed through step 202c1.

Step 202c1: In response to the second sub-input, the terminal device updates the first interface to the second interface, and displays the target content in a first input area in the second interface.

The second interface may be a previous interface displayed before the first interface is displayed.

For example, after the terminal device selects the target content, the user may tap and hold onto the target content to trigger the terminal device to perform step 202c.

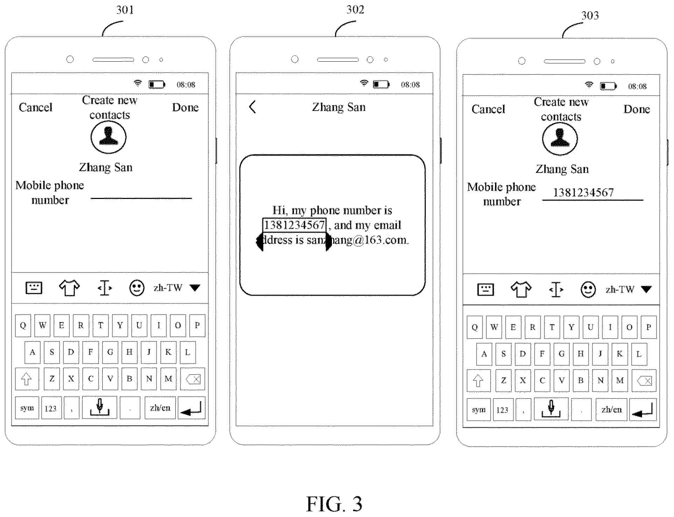

FIG. 3 is a schematic diagram of a display interface according to an embodiment of the present disclosure. For example, a first interface is a text message interface, and a second interface is a new contact interface. As shown in FIG. 3, an interface 301 is a new contact interface. When a user needs to input a mobile phone number of a new contact in a corresponding area for inputting the mobile phone number, the user may trigger a terminal device to display the text message interface, and the user triggers the terminal device to select (that is, a first sub-input) the mobile phone number in the text message interface, as shown in an interface 302, and then taps and holds onto (that is, a second sub-input) the mobile phone number. Then, the terminal device updates the interface 302 to an interface 303, and a corresponding area for inputting the mobile phone number in the interface 303 includes the mobile phone number selected by the user in the interface 302.

In a content inputting method in the embodiments of the present disclosure, the terminal device first receives the first sub-input of the user for target content, and the terminal device selects the target content in response to the first sub-input; and then the terminal device receives the second sub-input of the user for the target content, and the terminal device displays the target content in a target input area in response to the second sub-input. That is, the terminal device may directly input, after the second sub-input, the target content selected in the first interface in the target input area. Compared with the conventional method of copy and paste, in a case in which content is input in a same interface, the user does not need to tap an input area again and select paste to trigger the terminal device to display the target content in the input area; or in a case of inputting in different interfaces, the user does not need to manually trigger the terminal device to exit the first interface first, manually trigger the terminal device to bring up the second interface, to receive an input of the user and select an input area, and then trigger the terminal device to paste copied content in the input area, thereby avoiding frequent switching between different applications. Operation steps are simpler in the content inputting method provided in the embodiments of the present disclosure, and a time for operating content inputting is shortened. When content needs to be input in an input area for a plurality of times, more time for operating is saved.

In a possible implementation, the content inputting method provided in the embodiments of the present disclosure may further include step 204 and step 205 after the target content is selected by the terminal device.

Step 204: The terminal device displays a first control in response to the first sub-input.

The first control is used to copy and paste content.

Step 205: The terminal device receives the second sub-input of the user for the first control.

Further, step 202a may specifically be performed through step 202a1.

Step 202a 1: The target content is displayed in the target input area in response to the second sub-input of the user for the first control.

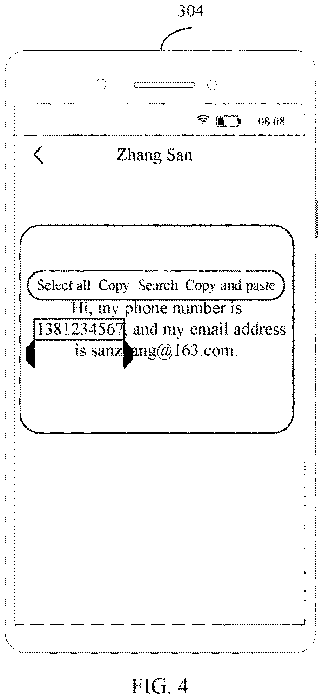

For example, it is assumed that the first control is "copy and paste". With reference to the interface 302 in FIG. 3, when the terminal device receives the first sub-input of the user, as shown in FIG. 4, the terminal device may display the "copy and paste" control and another control such as a "select all" control, a "copy" control, or a "search" control in an interface 304, and after the terminal device receives the second sub-input of the user for the "copy and paste" control, the terminal device may display the target content in the target input area.

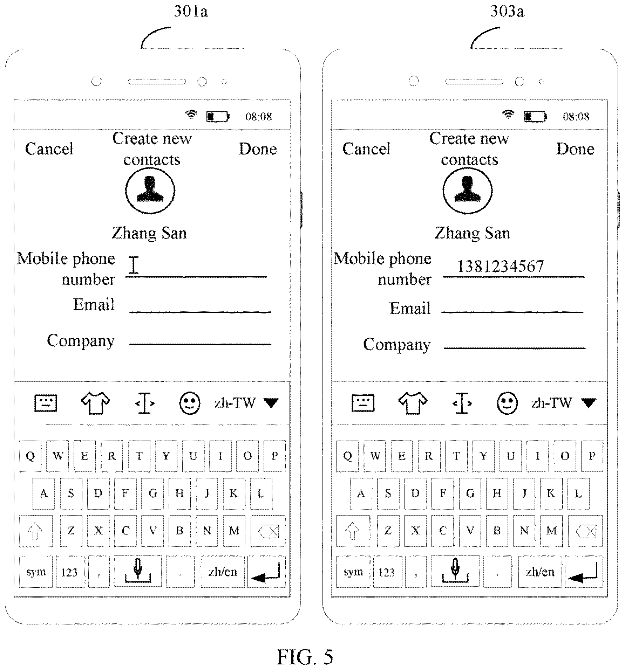

As shown in FIG. 5, it is assumed that three input areas, a corresponding area for inputting a mobile phone number, a corresponding area for inputting an e-mail address, and a corresponding area for inputting a company respectively, are included in an interface 301a. If the user taps the corresponding area for inputting a mobile phone number, a cursor pointer appears in the corresponding area for inputting a mobile phone number, and when the user controls the terminal device to display a text message interface such as the interface 304 in FIG. 4 after the interface 301a is displayed, and when the user controls the terminal device to select a phone number in a text message and taps a "copy and paste" control, the terminal device may update the interface 304 to the interface 301a, and display the mobile phone number selected in the text message interface in the area for inputting a mobile phone number in which the cursor pointer in the interface 301a is located, as shown in an interface 303a.

Based on this solution, after the terminal device receives the first sub-input of the user and selects the target content, the terminal device may display the first control used to copy and paste content, and the user may control the terminal device to display the target content in the target input area through the second sub-input for the first control, to facilitate operations of the user.

In a possible implementation, the content inputting method provided in the embodiments of the present disclosure may further include step 206 to step 209 before step 201.

Step 206: The terminal device receives a third input of the user in the second interface.

The third input may be an input of the user to trigger the terminal device to put a cursor pointer in the target input area in the second interface.

Step 207: The terminal device displays at least one application icon in response to the third input.

Optionally, the terminal device may display a sub-interface over the second interface, and display the at least one application icon in the sub-interface; or the terminal device may hover and display the at least one application icon over the second interface, and certainly may alternatively display the at least one application icon in another display manner. This is not specifically limited in this embodiment of the present disclosure.

For example, the at least one application icon may be an application icon of at least one application started by the user lately, or may be an application icon of at least one application in which the user copies content most frequently. The terminal device may determine the at least one application icon based on data on historical actions of the user operating the terminal device.

Step 208: The terminal device receives a fourth input of the user for a first application icon, where the first application icon indicates a first application.

Step 209: The terminal device updates the second interface to the first interface of the first application in response to the fourth input.

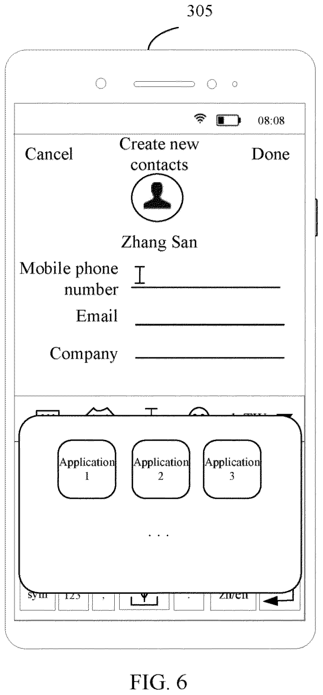

For example, with reference to the interface 301a in FIG. 5 and an interface 305 as shown in FIG. 6, when the user controls a cursor pointer to appear in an input area, the terminal device may display a sub-interface in the interface 301a, where the sub-interface includes application icons of three applications, and the user may select an application icon that needs to be used based on a requirement.

Based on this solution, the user may first open the second interface in which content needs to be input, and then the user may control the terminal device to display the at least one application icon in the second interface, so that the user can be facilitated to quickly find a position at which content that is to be copied is located, thereby shortening a time for inputting content.

Optionally, the second interface includes a second control.

For example, when the cursor pointer appears in the first input area, the second control may be displayed in the second interface. The second control may be used as a control in an interface of an input method, or may be used as an independent control and displayed in the second interface. This is not specifically limited in this embodiment of the present disclosure.

Further, step 206 may specifically be performed through step 206a.

Step 206a: The terminal device receives the third input of the user for the second control.

Based on this solution, the terminal device may display the second control in the second interface, to facilitate inputting of the user for the second control to trigger the terminal device to display an application icon, thereby helping the user to quickly find an application that needs to be used.

FIG. 7 is a schematic diagram of a possible structure of a terminal device according to claim 10 of the present invention. As shown in FIG. 7, the terminal device 700 includes a receiving module 701, a selection module 702, and a display module 703, where the receiving module 701 is configured to receive a first input of a user for target content in a first interface; the selection module 702 is configured to select the target content in response to the first input received by the receiving module 701; and the display module 703 is configured to display the target content in a target input area in response to the first input received by the receiving module 701, wherein the target input area is an input area in a second interface, and the first interface and the second interface are different; the second interface is a last interface displayed before the first interface is displayed by a terminal device.

Optionally, with reference to FIG. 7, as shown in FIG. 8, the terminal device further includes a determining module 704, where the determining module 704 is configured to determine the target input area after the target content is selected by the selection module 702.

Optionally, the target input area is an input area in the second interface; and the second interface is an interface displayed at a second time point that is before the first interface is displayed and that has a shortest time interval with a first time point for displaying the first interface; or the second interface is an interface displayed separately on a display screen with the first interface.

Optionally, the second interface is the interface displayed at the second time point that is before the first interface is displayed and that has the shortest time interval with the first time point for displaying the first interface; and the target input area is a first input area that is in the second interface and in which a cursor pointer at a third time point before the first interface is displayed that has a shortest time interval with a first time point is located; or the target input area is at least two second input areas in the second interface before the first interface is displayed, the second interface includes at least two third interfaces displayed separately on a display screen, and each second input area corresponds to a different third interface.

Optionally, the target input area is an input area in the first interface; and the target input area is a first input area that is in the first interface and in which a cursor pointer at a fourth time point that has a shortest time interval with a time point for receiving the first input is located.

Optionally, the second interface is the interface displayed at the second time point that is before the first interface is displayed and that has the shortest time interval with the first time point for displaying the first interface; and the display module 703 is further configured to: update the first interface to the second interface, and display the target content in the target input area.

Optionally, the first input includes a first sub-input and a second sub-input; the selection module 702 is specifically configured to select the target content in response to the first sub-input received by the receiving module 701; and the display module 703 is specifically configured to display, in response to the second sub-input received by the receiving module 701, the target content selected by the selection module 702 in the target input area.

Optionally, the display module 703 is further configured to display a first control after the target content is selected by the selection module 702, where the first control is used to copy and paste content; and the display module 703 is specifically configured to: receive the second sub-input of the user for the first control displayed by the display module 703, and display the target content in the target input area.

Optionally, the receiving module 701 is further configured to receive a third input of the user in the second interface before receiving the first input of the user for the target content in the first interface, where the third input is an input of the user to trigger putting a cursor pointer in the target input area; the display module 703 is further configured to display at least one application icon in response to the third input received by the receiving module 701; the receiving module 701 is further configured to receive a fourth input of the user for a first application icon, where the first application icon indicates a first application; and the display module 703 is further configured to update the second interface to the first interface of the first application in response to the fourth input received by the receiving module 701.

Optionally, the first interface and the second interface are different interfaces in a same application; or the first interface and the second interface are different interfaces in different applications.

Optionally, the second interface includes a second control; and the receiving module 701 is specifically configured to receive the third input of the user for the second control.

The terminal device 700 provided in this embodiment of the present disclosure can implement processes implemented by the terminal device in the foregoing method embodiments. To avoid repetition, details are not described herein again.

According to the terminal device provided in this embodiment of the present disclosure, the terminal device first receives the first input of the user for the target content in the first interface; and then in response to the first input, the terminal device selects the target content, and displays the target content in the target input area. The target input area is an input area in the first interface, or the target input area is an input area in the second interface, and the first interface and the second interface are different. In one case, the target input area is an input area in the first interface, that is, in a case in which content is input in a same interface, the user does not need to tap the input area again and select paste to trigger the terminal device to display the target content in the input area. In the other case, the target input area is an input area in the second interface, and the first interface and the second interface are different. That is, in a case in which content is input in different interfaces, the target content is displayed in the target input area in the second interface by using the first input, and the target content is content in the first interface. That is, the terminal device may directly input, after the first input, the target content selected in the first interface in an input area in another interface. Compared with the conventional method of copy and paste, the user does not need to trigger the terminal device to exit the first interface first, manually trigger the terminal device to bring up the second interface, to receive an input of the user and select an input area, and then trigger the terminal device to paste copied content in the input area, thereby avoiding frequent switching between different applications. Therefore, operation steps are simpler in the content inputting method provided in the embodiments of the present disclosure, and a time for operating content inputting is shortened. When content needs to be input in an input area for a plurality of times, more time for operating is saved.

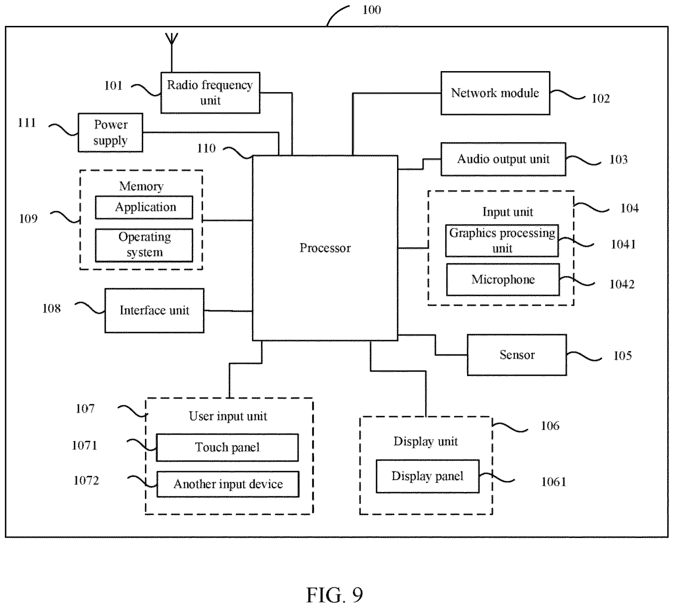

FIG. 9 is a schematic diagram of a hardware structure of a terminal device implementing the various embodiments of the present disclosure. The terminal device 100 includes, but not limited to: a radio frequency unit 101, a network module 102, an audio output unit 103, an input unit 104, a sensor 105, a display unit 106, a user input unit 107, an interface unit 108, a memory 109, a processor 110, a power supply 111, and the like. A person skilled in the art can understand that the structure of the terminal device shown in FIG. 9 does not constitute a limitation to the terminal device. The terminal device may include more or fewer components than those shown in the figure, a combination of some components, or different arrangement of components. In the embodiments of the present disclosure, the terminal device includes, but is not limited to, a mobile phone, a tablet computer, a notebook computer, a palmtop computer, a vehicle-mounted terminal, a wearable device, a pedometer, and the like.

The user input unit 107 is configured to receive a first input of a user for target content in a first interface; the processor 110 is configured to select the target content in response to the first input; and the display unit 106 is configured to display the target content in a target input area in response to the first input, where the target input area is an input area in the first interface, or the target input area is an input area in a second interface, and the first interface and the second interface are different.

According to the terminal device provided in this embodiment of the present disclosure, the terminal device first receives the first input of the user for the target content in the first interface; and then in response to the first input, the terminal device selects the target content, and displays the target content in the target input area. The target input area is an input area in the first interface, or the target input area is an input area in the second interface, and the first interface and the second interface are different. In one case, the target input area is an input area in the first interface, that is, in a case in which content is input in a same interface, the user does not need to tap the input area again and select paste to trigger the terminal device to display the target content in the input area. In the other case, the target input area is an input area in the second interface, and the first interface and the second interface are different. That is, in a case in which content is input in different interfaces, the target content is displayed in the target input area in the second interface by using the first input, and the target content is content in the first interface. That is, the terminal device may directly input, after the first input, the target content selected in the first interface in an input area in another interface. Compared with the conventional method of copy and paste, the user does not need to trigger the terminal device to exit the first interface first, manually trigger the terminal device to bring up the second interface, to receive an input of the user and select an input area, and then trigger the terminal device to paste copied content in the input area, thereby avoiding frequent switching between different applications. Therefore, operation steps are simpler in the content inputting method provided in the embodiments of the present disclosure, and a time for operating content inputting is shortened. When content needs to be input in an input area for a plurality of times, more time for operating is saved.

It should be understood that, in this embodiment of the present disclosure, the radio frequency unit 101 may be configured to receive and send information or a signal in a call process. Specifically, after receiving downlink data from a base station, the radio frequency unit 101 sends the downlink data to the processor 110 for processing. In addition, the radio frequency unit 101 sends uplink data to the base station. Generally, the radio frequency unit 101 includes, but is not limited to, an antenna, at least one amplifier, a transceiver, a coupler, a low noise amplifier, and a duplexer, and the like. In addition, the radio frequency unit 101 may further communicate with another communications device through a wireless communication system and network.

The terminal device provides wireless broadband Internet access for the user by using the network module 102, for example, helping the user to send and receive an e-mail, browse a web page, and access streaming media.

The audio output unit 103 may convert audio data received by the radio frequency unit 101 or the network module 102 or stored in the memory 109 into an audio signal, and output the audio signal as sound. In addition, the audio output unit 103 may further provide an audio output (for example, a call signal receiving sound and a message receiving sound) related to a specific function performed by the terminal device 100. The audio output unit 103 includes a speaker, a buzzer, a telephone receiver, and the like.

The input unit 104 is configured to receive an audio signal or a video signal. The input unit 104 may include a graphics processing unit (Graphics Processing Unit, GPU) 1041 and a microphone 1042. The graphics processing unit 1041 processes image data of a static picture or a video obtained by an image capturing apparatus (for example, a camera) in a video capturing mode or an image capturing mode. A processed image frame can be displayed on the display unit 106. An image frame processed by the graphics processing unit 1041 may be stored in the memory 109 (or another storage medium) or sent by the radio frequency unit 101 or the network module 102. The microphone 1042 may receive a sound and may process such a sound into audio data. The processed audio data may be converted, in a call mode, into a format that may be sent to a mobile communication base station by using the radio frequency unit 101 for output.

The terminal device 100 further includes at least one sensor 105, for example, an optical sensor, a motion sensor, and other sensors. Specifically, the optical sensor includes an ambient light sensor and a proximity sensor. The ambient light sensor may adjust luminance of a display panel 1061 based on brightness of an ambient light. The proximity sensor may turn off the display panel 1061 and/or a backlight when the terminal device 100 is moved to an ear. As a type of the motion sensor, an accelerometer sensor can detect an acceleration in each direction (generally, three axes), and detect a value and a direction of gravity when the accelerometer sensor is static, and may be configured to recognize a terminal device posture (such as screen switching between landscape and portrait modes, a related game, or magnetometer posture calibration), a function related to vibration recognition (such as a pedometer or a knock), and the like. The sensor 105 may further include a fingerprint sensor, a pressure sensor, an iris sensor, a molecular sensor, a gyroscope, a barometer, a hygrometer, a thermometer, and an infrared sensor. Details are not described herein.

The display unit 106 is configured to display information inputted by a user or information provided to a user. The display unit 106 may include the display panel 1061, and the display panel 1061 may be configured in a form of a liquid crystal display (Liquid Crystal Display, LCD), an organic light-emitting diode (Organic Light-Emitting Diode, OLED), or the like.

The user input unit 107 may be configured to: receive an inputted digit or character information, and generate a key signal input related to user setting and function control of the terminal device. Specifically, the user input unit 107 includes a touch panel 1071 and another input device 1072. The touch panel 1071, also referred to as a touchscreen, can collect a touch operation of a user on or near the touch panel 1071 (for example, an operation performed by the user with any suitable object or accessory such as a finger or a stylus on or near the touch panel 1071). The touch panel 1071 may include two parts: a touch detection apparatus and a touch controller. The touch detection apparatus detects a touch position of the user, detects a signal brought by the touch operation, and sends the signal to the touch controller. The touch controller receives touch information from the touch detection apparatus, converts the touch information into touch point coordinates, and sends the touch point coordinates to the processor 110, and can receive and execute a command sent by the processor 110. In addition, the touch panel 1071 may be implemented in a plurality of forms such as a resistive type, a capacitive type, an infrared ray, and a surface acoustic wave. In addition to the touch panel 1071, the user input unit 107 may further include the another input device 1072. Specifically, the another input device 1072 may include, but is not limited to, a physical keyboard, a function key (for example, a volume control key or a switch key), a trackball, a mouse, and a joystick. Details are not described herein again.

Further, the touch panel 1071 can cover the display panel 1061. When detecting a touch operation on or near the touch panel 1071, the touch panel 1071 transmits the touch operation to the processor 110 to determine a type of the touch event. Then, the processor 110 provides a corresponding visual output on the display panel 1061 based on the type of the touch event. Although in FIG. 9, the touch panel 1071 and the display panel 1061 are configured as two independent components to implement input and output functions of the terminal device, in some embodiments, the touch panel 1071 and the display panel 1061 may be integrated to implement the input and output functions of the terminal device. This is not specifically limited herein.

The interface unit 108 is an interface for connecting an external apparatus to the terminal device 100. For example, the external apparatus may include a wired or wireless headset jack, an external power supply (or a battery charger) port, a wired or wireless data port, a storage card port, a port for connecting an apparatus having an identification module, an audio input/output (I/O) port, a video I/O port, a headset jack, or the like. The interface unit 108 may be configured to: receive an input (for example, data information or power) from the external apparatus, and transmit the received input to one or more elements in the terminal device 100, or may be configured to transmit data between the terminal device 100 and the external apparatus.

The memory 109 may be configured to store a software program and various data. The memory 109 may mainly include a program storage area and a data storage area. The program storage area may store an operating system, an application required for at least one function (for example, a sound playback function or an image playback function), and the like. The data storage area may store data (for example, audio data or an address book) or the like created based on use of the mobile phone. In addition, the memory 109 may include a high-speed random access memory, or may include a non-volatile memory, for example, at least one disk storage device, a flash memory, or another non-volatile solid-state storage device.

The processor 110 is a control center of the terminal device, connects various parts of the entire terminal device through various interfaces and circuits, and performs various functions of the terminal device and processes data by running or executing the software programs and/or the modules stored in the memory 109 and invoking data stored in the memory 109, to monitor the terminal device as a whole. The processor 110 may include one or more processing units. Optionally, the processor 110 may be integrated with an application processor and a modem processor. The application processor mainly processes an operating system, a user interface, an application, and the like, and the modem processor mainly processes wireless communication. It can be understood that the above-mentioned modem processor may alternatively not be integrated in the processor 110.

The terminal device 100 may further include the power supply 111 (such as a battery) that supplies power to each component. Optionally, the power supply 111 may be logically connected to the processor 110 by using a power management system, to implement functions such as charging, discharging, and power consumption management by using the power management system.

In addition, the terminal device 100 includes some functional modules that are not shown. Details are not described herein.

Optionally, an embodiment of the present disclosure further provides a terminal device that, with reference to FIG. 9, includes a processor 110, a memory 109, and a computer program that is stored in the memory 109 and executable on the processor 110. When the computer program is executed by the processor 110, the processes in the foregoing content inputting method embodiment are implemented and a same technical effect can be achieved. To avoid repetition, details are not described herein again.

An embodiment of the present disclosure further provides a computer-readable storage medium. The computer-readable storage medium stores a computer program, and when a processor executes the computer program, the foregoing processes of the content inputting method embodiment are implemented and a same technical effect can be achieved. To avoid repetition, details are not described herein again. The computer readable storage medium may be a read-only memory (Read-Only Memory, ROM), a random access memory (Random Access Memory, RAM), a magnetic disk, a compact disc, or the like.

It should be noted that in this specification, the terms "comprise", "include" and any other variant thereof are intended to cover non-exclusive inclusion, so that a process, a method, an article, or an apparatus that includes a series of elements not only includes the elements, but may further include other elements not expressly listed, or further include elements inherent to this process, method, article, or apparatus. An element limited by "includes/comprises a..." does not, without more constraints, preclude the presence of additional identical elements in the process, method, article, or apparatus that includes the element.

Based on the descriptions of the foregoing implementations, a person skilled in the art can clearly understand that the method in the foregoing embodiment may be implemented by software in addition to a necessary universal hardware platform or by hardware only. In most circumstances, the former is a preferred implementation. Based on such an understanding, the technical solutions of the present disclosure essentially or the part contributing to the prior art may be implemented in a form of a software product. The computer software product is stored in a storage medium (such as a ROM/RAM, a magnetic disk, or an optical disc), and includes several instructions for instructing a terminal device (which may be a mobile phone, a computer, a server, an air conditioner, a network device, or the like) to perform the methods described in the embodiments of the present disclosure.

## Claims

1. A content input method for a terminal device comprising a first interface, a second interface and a display, wherein the method comprises:
receiving (201) a first input of a user for target content in a first interface; and
**characterized by** in response to the first input, selecting (202) the target content, and displaying (202) the target content in a target input area, wherein
the target input area is an input area in a second interface, and the first interface and the second interface are different; and the second interface is a last interface displayed before the first interface is displayed by the terminal device.

2. The method according to claim 1, wherein after the selecting (202) the target content, the method further comprises:
determining the target input area.

3. The method according to claim 1; and
the target input area is a first input area that is in the second interface and in which a cursor pointer is located last time before the first interface is displayed; or
the target input area includes at least two second input areas in the second interface before the first interface is displayed, wherein the second interface comprises at least two third interfaces that are displayed separately on a display screen, and each second input area corresponds to a different third interface.

4. The method according to claim 1, wherein the second interface is the last interface displayed before the first interface is displayed by the terminal device; and
the displaying (202) the target content in a target input area comprises:
displaying the second interface, and after determining the target input area, pasting the target content in the target input area.

5. The method according to claim 1 or 2, wherein the target input area is the input area in the first interface; and
the target input area is a first input area that is in the first interface and in which a cursor pointer is located last time.

6. The method according to claim 1 or 2, wherein the first input comprises a first sub-input and a second sub-input; and the in response to the first input, selecting (202) the target content, and displaying (202) the target content in a target input area comprises:
selecting the target content in response to the first sub-input; and
displaying the target content in the target input area in response to the second sub-input.

7. The method according to claim 6, wherein after the selecting (202) the target content, the method further comprises:
displaying a first control, wherein the first control is used to copy and paste content; and
the displaying the target content in the target input area in response to the second sub-input comprises:
displaying the target content in the target input area in response to the second sub-input of the user for the first control.

8. The method according to claim 1 or 2, wherein before the receiving (201) a first input of a user for target content in a first interface, the method further comprises:
receiving a third input of the user in the second interface, wherein the third input is an input of the user to trigger putting a cursor pointer in the target input area;
displaying at least one application icon in response to the third input;
receiving a fourth input of the user for a first application icon, wherein the first application icon indicates a first application; and
updating the second interface to the first interface of the first application in response to the fourth input.

9. The method according to claim 1 or 2, wherein
the first interface and the second interface are different interfaces in a same application; or
the first interface and the second interface are different interfaces in different applications.

10. A terminal device (700), wherein the terminal device (700) comprises a receiving module (701), a selection module (702), and a display module (703), wherein
the receiving module (701) is configured to receive a first input of a user for target content in a first interface; and
**characterized in that** the selection module (702) is configured to select the target content in response to the first input received by the receiving module (701); and
the display module (703) is configured to display the target content in a target input area in response to the first input received by the receiving module (701), wherein
the target input area is an input area in a second interface, the first interface and the second interface are different; and the
second interface is a last interface displayed before the first interface is displayed by the terminal device.

11. The terminal device (700) according to claim 10, wherein the terminal device (700) further comprises a determining module (704), and
the determining module (704) is configured to determine the target input area after the target content is selected by the selection module (702).

12. A computer-readable storage medium, wherein the computer-readable storage medium stores a computer program, and when the computer program is executed by a processor (110), the steps of the content input method according to any one of claims 1 to 9 are implemented.

## Patentansprüche

1. Inhaltseingabeverfahren für ein Endgerät umfassend eine erste Schnittstelle, eine zweite Schnittstelle und ein Display, worin das Verfahren umfasst:
Empfangen (201) einer ersten Eingabe eines Benutzers für Zielinhalt in einer ersten Schnittstelle; und
**gekennzeichnet durch**, als Antwort auf die erste Eingabe, Auswählen (202) des Zielinhalts, und Anzeigen (202) des Zielinhalts in einem Zieleingabebereich, worin
der Zieleingabebereich ein Eingabebereich in einer zweiten Schnittstelle ist, und die erste Schnittstelle und die zweite Schnittstelle verschieden sind; und die zweite Schnittstelle eine letzte Schnittstelle ist, die angezeigt wird, bevor die erste Schnittstelle vom Endgerät angezeigt wird.

2. Verfahren nach Anspruch 1, worin nach dem Auswählen (202) des Zielinhalts das Verfahren ferner umfasst:
Bestimmen des Zieleingabebereichs.

3. Verfahren nach Anspruch 1, und der Zieleingabebereich ist ein erster Eingabebereich, der in der zweiten Schnittstelle ist, und in dem ein Cursorzeiger das letzte Mal gelegen ist, bevor die erste Schnittstelle angezeigt wird; oder
der Zieleingabebereich umfasst zumindest zwei zweite Eingabebereiche in der zweiten Schnittstelle, bevor die erste Schnittstelle angezeigt wird, worin die zweite Schnittstelle zumindest zwei dritte Schnittstellen umfasst, die an einem Anzeigebildschirm getrennt angezeigt sind, und jeder zweite Eingabebereich einer verschiedenen dritten Schnittstelle entspricht.

4. Verfahren nach Anspruch 1, worin die zweite Schnittstelle die letzte Schnittstelle ist, die angezeigt wird, bevor die erste Schnittstelle vom Endgerät angezeigt wird; und
das Anzeigen (202) des Zielinhalts in einem Zieleingabebereich umfasst:
Anzeigen der zweiten Schnittstelle, und nach dem Bestimmen des Zieleingabebereichs, Einfügen des Zielinhalts in den Zieleingabebereich.

5. Verfahren nach Anspruch 1 oder 2, worin der Zieleingabebereich der Eingabebereich in der ersten Schnittstelle ist; und
der Zieleingabebereich ein erster Eingabebereich ist, der in der ersten Schnittstelle ist, und in dem ein Cursorzeiger das letzte Mal gelegen ist.

6. Verfahren nach Anspruch 1 oder 2, worin die erste Eingabe eine erste Untereingabe und eine zweite Untereingabe umfasst; und das, als Antwort auf die erste Eingabe, Auswählen (202) des Zielinhalts, und Anzeigen (202) des Zielinhalts in einem Zieleingabebereich umfasst:
Auswählen des Zielinhalts als Antwort auf die erste Untereingabe; und
Anzeigen des Zielinhalts in dem Zieleingabebereich als Antwort auf die zweite Untereingabe.

7. Verfahren nach Anspruch 6, worin nach dem Auswählen (202) des Zielinhalts das Verfahren ferner umfasst:
Anzeigen einer ersten Steuerung, worin die erste Steuerung verwendet wird, um Inhalt zu kopieren und einzufügen; und
das Anzeigen des Zielinhalts in dem Zieleingabebereich als Antwort auf die zweite Untereingabe umfasst:
Anzeigen des Zielinhalts in dem Zieleingabebereich als Antwort auf die zweite Untereingabe des Benutzers für die erste Steuerung.

8. Verfahren nach Anspruch 1 oder 2, worin vor dem Empfangen (201) einer ersten Eingabe eines Benutzers für Zielinhalt in einer ersten Schnittstelle das Verfahren ferner umfasst:
Empfangen einer dritten Eingabe des Benutzers in der zweiten Schnittstelle, worin die dritte Eingabe eine Eingabe des Benutzers ist, um das Setzen eines Cursorzeigers im Zieleingabebereich auszulösen;
Anzeigen zumindest eines Anwendungsicons als Antwort auf die dritte Eingabe;
Empfangen einer vierten Eingabe des Benutzers für ein erstes Anwendungsicon, worin das erste Anwendungsicon eine erste Anwendung zeigt; und
Aktualisieren der zweiten Schnittstelle zur ersten Schnittstelle der ersten Anwendung als Antwort auf die vierte Eingabe.

9. Verfahren nach Anspruch 1 oder 2, worin
die erste Schnittstelle und die zweite Schnittstelle verschiedene Schnittstellen in einer selben Anwendung sind; oder
die erste Schnittstelle und die zweite Schnittstelle verschiedene Schnittstellen in verschiedenen Anwendungen sind.

10. Endgerät (700), worin das Endgerät (700) ein Empfangsmodul (701), ein Auswählmodul (702) und ein Anzeigemodul (703) umfasst, worin
das Empfangsmodul (701) dafür ausgelegt ist, eine erste Eingabe eines Benutzers für Zielinhalt in einer ersten Schnittstelle zu empfangen; und
**dadurch gekennzeichnet, dass** das Auswählmodul (702) dafür ausgelegt ist, den Zielinhalt als Antwort auf die erste Eingabe, die vom Empfangsmodul (701) empfangen wird, auszuwählen; und
das Anzeigemodul (703) dafür ausgelegt ist, den Zielinhalt in einem Zieleingabebereich als Antwort auf die erste Eingabe, die vom Empfangsmodul (701) empfangen wird, anzuzeigen, worin
der Zieleingabebereich ein Eingabebereich in einer zweiten Schnittstelle ist, die erste Schnittstelle und die zweite Schnittstelle verschieden sind; und die zweite Schnittstelle eine letzte Schnittstelle ist, die angezeigt wird, bevor die erste Schnittstelle vom Endgerät angezeigt wird.

11. Endgerät (700) nach Anspruch 10, worin das Endgerät (700) ferner ein Bestimmungsmodul (704) umfasst, und
das Bestimmungsmodul (704) dafür ausgelegt ist, den Zieleingabebereich zu bestimmen, nachdem der Zielinhalt vom Auswählmodul (702) ausgewählt wird.

12. Computerlesbares Speichermedium, worin das computerlesbare Speichermedium ein Computerprogramm speichert, und wenn das Computerprogramm von einem Prozessor (110) ausgeführt wird, die Schritte des Inhaltseingabeverfahrens nach einem der Ansprüche 1 bis 9 implementiert werden.

## Revendications

1. Procédé d'entrée de contenu pour un dispositif terminal comprenant une première interface, une deuxième interface et un dispositif d'affichage, dans lequel le procédé comprend :
la réception (201) d'une première entrée d'un utilisateur pour un contenu cible dans une première interface ; et
**caractérisé par**, en réponse à la première entrée, la sélection (202) du contenu cible, et l'affichage (202) du contenu cible dans une zone d'entrée cible, dans lequel la zone d'entrée cible est une zone d'entrée dans une deuxième interface, et la première interface et la deuxième interface sont différentes ; et la deuxième interface est une dernière interface affichée avant que la première interface ne soit affichée par le dispositif terminal.

2. Procédé selon la revendication 1, dans lequel après la sélection (202) du contenu cible, le procédé comprend en outre :
la détermination de la zone d'entrée cible.

3. Procédé selon la revendication 1, et
la zone d'entrée cible est une première zone d'entrée qui se trouve dans la deuxième interface et dans laquelle un pointeur de curseur a été localisé en dernier avant que la première interface ne soit affichée ; ou
la zone d'entrée cible inclut au moins deux secondes zones d'entrée dans la deuxième interface avant que la première interface ne soit affichée, dans lequel la deuxième interface comprend au moins deux troisièmes interfaces qui sont affichées séparément sur un écran d'affichage, et chaque seconde zone d'entrée correspond à une troisième interface différente.

4. Procédé selon la revendication 1, dans lequel la deuxième interface est la dernière interface affichée avant que la première interface ne soit affichée par le dispositif terminal ; et
l'affichage (202) du contenu cible dans une zone d'entrée cible comprend :
l'affichage de la deuxième interface, et après avoir déterminé la zone d'entrée cible, le collage du contenu cible dans la zone d'entrée cible.

5. Procédé selon la revendication 1 ou 2, dans lequel la zone d'entrée cible est la zone d'entrée dans la première interface ; et
la zone d'entrée cible est une première zone d'entrée qui se trouve dans la première interface et dans laquelle un pointeur de curseur a été localisé en dernier.

6. Procédé selon la revendication 1 ou 2, dans lequel la première entrée comprend une première sous-entrée et une seconde sous-entrée ; et en réponse à la première entrée, la sélection (202) du contenu cible, et l'affichage (202) du contenu cible dans une zone d'entrée cible comprend :
la sélection du contenu cible en réponse à la première sous-entrée ; et
l'affichage du contenu cible dans la zone d'entrée cible en réponse à la seconde sous-entrée.

7. Procédé selon la revendication 6, dans lequel après la sélection (202) du contenu cible, le procédé comprend en outre :
l'affichage d'une première commande, dans lequel la première commande sert à copier et coller du contenu ; et
l'affichage du contenu cible dans la zone d'entrée cible en réponse à la seconde sous-entrée comprend :
l'affichage du contenu cible dans la zone d'entrée cible en réponse à la seconde sous-entrée de l'utilisateur pour la première commande.

8. Procédé selon la revendication 1 ou 2, dans lequel avant la réception (201) d'une première entrée d'un utilisateur pour un contenu cible dans une première interface, le procédé comprend en outre :
la réception d'un troisième entrée de l'utilisateur dans la deuxième interface, dans lequel la troisième entrée est une entrée de l'utilisateur pour déclencher la mise en place d'un pointeur de curseur dans la zone d'entrée cible ;
l'affichage d'au moins une icône d'application en réponse à la troisième entrée ;
la réception d'une quatrième entrée de l'utilisateur pour une première icône d'application, dans lequel la première icône d'application indique une première application ; et
la mise à jour de la deuxième interface vers la première interface de la première application en réponse à la quatrième entrée.

9. Procédé selon la revendication 1 ou 2, dans lequel
la première interface et la deuxième interface sont des interfaces différentes dans une même application ; ou
la première interface et la deuxième interface sont des interfaces différentes dans des applications différentes.

10. Dispositif terminal (700), dans lequel le dispositif terminal (700) comprend un module de réception (701), un module de sélection (702) et un module d'affichage (703), dans lequel
le module de réception (701) est configuré pour recevoir une première entrée d'un utilisateur pour un contenu cible dans une première interface ; et
**caractérisé en ce que** le module de sélection (702) est configuré pour sélectionner le contenu cible en réponse à la première entrée reçue par le module de réception (701) ; et
le module d'affichage (703) est configuré pour afficher le contenu cible dans une zone d'entrée cible en réponse à la première entrée reçue par le module de réception (701), dans lequel
la zone d'entrée cible est une zone d'entrée dans une deuxième interface, la première interface et la deuxième interface sont différentes ;
et la deuxième interface est une dernière interface affichée avant que la première interface ne soit affichée par le dispositif terminal.

11. Dispositif terminal (700) selon la revendication 10, dans lequel le dispositif terminal (700) comprend en outre un module de détermination (704), et
le module de détermination (704) est configuré pour déterminer la zone d'entrée cible après que le contenu cible a été sélectionné par le module de sélection (702).

12. Support de stockage lisible par ordinateur, dans lequel le support de stockage lisible par ordinateur stocke un programme informatique ; et lorsque le programme informatique est exécuté par un processeur (110), les étapes du procédé d'entrée de contenu selon l'une quelconque des revendications 1 à 9 sont mises en oeuvre.
